# EUROPÄISCHE PATENTSCHRIFT

(11) **EP 3 354 683 B1**
(45) Veröffentlichungstag und Bekanntmachung des Hinweises auf die Patenterteilung: **30.10.2024**
(21) Anmeldenummer: 18153574.1
(22) Anmeldetag: 26.01.2018
(51) Int. Cl.: C08K 3/04, C08K 3/08, G01N 30/88

(54) **STOFFGEMISCH ZUR HERKUNFTSBESTIMMUNG VON MATERIALIEN**
MIXTURE OF SUBSTANCES FOR DETERMINING THE ORIGIN OF MATERIALS
MÉLANGE DE SUBSTANCES DESTINÉ À LA DÉTERMINATION DE L'ORIGINE DE MATÉRIAUX

(30) Priorität: 26.01.2017 DE 102017101563
(43) Veröffentlichungstag der Anmeldung: 01.08.2018
(73) Patentinhaber: Curt-Engelhorn-Zentrum Archäometrie gGmbH, 68159 Mannheim (DE)
(72) Erfinder: Brauns, Michael, 67454 Haßloch (DE)
(74) Vertreter: Hamel, Armin

(56) Entgegenhaltungen:
- WO-A1-2007/102023
- WO-A1-2016/153819
- SU-A1- 1 731 852
- US-A- 2 070 451
- US-A- 5 677 187
- US-B1- 6 432 559
- MICHAEL BRAUNS ET AL: "Provenance of Iron Age iron in southern Germany: a new approach", JOURNAL OF ARCHAEOLOGICAL SCIENCE, vol. 40, no. 2, February 2013 (2013-02-01), US, pages 841 - 849, XP055461488, ISSN: 0305-4403, DOI: 10.1016/j.jas.2012.08.044

## Beschreibung

Die Erfindung betrifft ein Stoffgemisch zur Herkunftsbestimmung von Materialien sowie ein Material, das das Stoffgemisch enthält.

In der Fertigungstechnik werden Werkstücke mit einer geometrisch bestimmbaren Form hergestellt. Es werden somit immer Stückgüter hergestellt. Häufig stellen diese Werkstücke jedoch nur Halbfertigprodukte dar, die zu Fertigerzeugnissen weiterverarbeitet werden, oder es werden aus diesen Werkstücken weitere Halbfertigprodukte hergestellt, die schließlich zur Herstellung von Fertigerzeugnissen verwendet werden können. Dabei kann es passieren, dass Fertigerzeugnisse aufgrund von schlechter Qualität von nur einigen wenigen Werkstücken bzw. Halbfertigprodukten, die in dem Fertigerzeugnis verarbeitet worden sind, zum Beispiel Ermüdungserscheinungen aufweisen. In diesem Fall möchte natürlich der Hersteller dieser Fertigerzeugnisse wissen, aufgrund welcher Werkstücke bzw. Halbfertigprodukte dieses geschehen ist, so dass es sich bei möglichen Regressansprüchen an die oder den Hersteller dieser Produkte werden kann. Bisher war es jedoch nicht möglich einwandfrei festzustellen, wer Hersteller dieser Werkstücke und insbesondere Halbfertigprodukte war.

Aus US 5 677 187 A ist eine chemische Verbindung bekannt, die ein Markierungsmittel enthält, das darin gleichmäßig auf atomarer Ebene dispergiert ist, wobei das Markierungsmittel mindestens zwei verschiedene seltene Elemente des Periodensystems enthält.

BRAUNS, Michael, et al. Provenance of Iron Age iron in southern Germany: a new approach. Journal of Archaeological Science, 2013, 40. Jg., Nr. 2, S. 841-849 beschreibt archäologische Funde, wobei auch Eisenerz beschrieben wird, das Osmium enthält.

SU 1 731 852 A1 beschreibt eine Wolfram-Legierung, die auch Rhenium und Osmium enthält.

Schließlich sind aus US 6 432 559 B1 Identifikationsmarker und Identifikationsverfahren für feste Objekte, einschließlich metallischer Objekte, bekannt, wobei der Marker in dem Objekt integriert ist, so dass der Marker weder optisch sichtbar noch entfernbar ist, ohne das Objekt zu zerstören oder zu beeinträchtigen.

Aufgabe der vorliegenden Erfindung ist es, ein Stoffgemisch bereitzustellen, mit dem die Herkunft von Materialien einfacher und schneller festgestellt werden kann.

Diese Aufgabe wird nach den Merkmalen des Patentanspruchs 1 gelöst.

[A01] Die Erfindung betrifft daher ein Stoffgemisch zur Herkunftsbestimmung von Materialien, wobei das Stoffgemisch einen ersten Bestandteil (w1) sowie einen zweiten Bestandteil (w2), wobei der erste Bestandteil zumindest ein Isotop des Metalls Osmium (Os) ist und wobei der zweite Bestandteil zumindest W enthält, wobei der Massenanteil w₂ des zweiten Bestandteils um mindestens 5 %, vorzugsweise 10 %, größer ist als der Massenanteil w₁ des ersten Bestandteils. Neben W kann der zweite Bestandteil auch noch zumindest ein weiteres Metall enthalten.

Vorteilhaft ist dabei, dass durch das dem Material zugesetzten Stoffgemisch, sehr einfach und schnell festgestellt werden kann, von welchem Hersteller das Material stammt. Diese Herkunftsbestimmung dient letztendlich auch einer Qualitätskontrolle der entsprechenden Materialien.

Als zweiter Bestandteil wird W eingesetzt, so dass das Stoffgemisch zumindest ein Os- Isotop sowie W umfasst. Es hat sich herausgestellt, dass dieses Stoffgemisch besonders gut geeignet ist, um die Herkunft und damit die Qualität des Materials zu bestimmen.

Vorteilhaft ist dabei, dass das Stoffgemisch neben W als zweiten Bestandteil ¹⁸⁴Os und/oder ¹⁸⁶Os als ersten Bestandteil umfasst, weil mit diesem Stoffgemisch die Herkunft des Materials besonders gut bestimmt werden kann.

Zudem ist vorteilhaft, dass sich Os sehr gut recyceln lässt und somit wiederverwendet werden kann. So kann Os, nachdem es aus dem Material herausgelöst und abgetrennt wurde, sehr einfach zum flüchtigen OsO₄ oxidiert werden. Die Oxidation kann beispielsweise mit HNO₃ oder mit Cr^{VI} in H₂SO₄ erfolgen. Anschließend wird OsO₄ durch Destillation abgetrennt, wobei durch Reduktion letztendlich als Hexabrom Osmiumsäure (H₂OsBr₆) stabilisiert zurückgewonnen wird.

[A02] Bevorzugt werden Metalle eingesetzt, deren Ordnungszahl größer als 30 ist, weil sich diese Metalle sehr gut durch instrumentelle Verfahren nachweisen lassen. Als Nachweiserfahren eignen sich beispielsweise Voltametrie, Atomspektroskopie oder Massenspektroskopie.

[A03] Besonders bevorzugt werden Metalle eingesetzt, die eine Ordnungszahl aufweisen, die größer als 40 ist. Diese Metalle sind vorzugsweise aus der Gruppe Molybdän (Mo), Palladium (Pd), Platin (Pt), Gold (Au), Blei (Pb), Iridium (Ir), Niobium (Nb) undloder Tantal (Ta) ausgewählt, da sich diese Metalle besonders gut durch instrumentelle Verfahren, zum Beispiel Voltametrie, Atomspektroskopie oder Massenspektroskopie, nachweisen lassen.

[A04] Die Erfindung betrifft auch ein Material, das mit dem Stoffgemisch dotiert ist. Dieses Stoffgemisch dient als Marker, wodurch sich die Herkunft, das heißt der Hersteller des Materials, sehr einfach und einwandfrei feststellen lässt.

[A05] Vorteilhaft ist ferner, dass das Stoffgemisch jedem Material zugesetzt werden kann und damit jedes Material durch das Stoffgemisch markiert werden kann. Das Material kann daher aus der Gruppe metallischer Werkstoff, anorganischer nichtmetallischer Werkstoff, nichtmetallischer Werkstoff, organischer Werkstoff, Halbleiter und Verbundwerkstoff ausgewählt sein. Dabei ist einem Fachmann klar, dass die oben erwähnten Werkstoffe nicht nur aus einem Stoff, sondern auch aus mehreren Stoffen bestehen können. Somit kann es sich beispielsweise bei dem metallischen Werkstoff auch um eine Metalllegierung handeln, die mit dem Stoffgemisch dotiert ist.

[A06] Vorzugsweise enthält das Material 10 bis 1100 ppt an Stoffgemisch. Eine solche Menge an zugesetztem Stoffgemisch ist ausreichend, um durch analytische Verfahren die Zusammensetzung des Stoffgemisches einwandfrei festzustellen.

[A07] Besonders bevorzugt enthält das Material 10 bis 160 ppt an Stoffgemisch. Dadurch können Marker mit den unterschiedlichsten Zusammensetzungen bereitgestellt werden.

[A08] Bevorzugt weist das Material 10 bis 30 ppt an Stoffgemisch auf. Eine solche Menge an zugesetztem Stoffgemisch ist immer noch ausreichend, um die Herkunft des Materials eindeutig zu bestimmen.

[A09] Des Weiteren betrifft die Erfindung die Verwendung des Stoffgemisches als Marker in Materialien. Durch diesen Marker lässt sich die Herkunft dieser Materialien sehr einfach bestimmen.

Im Folgenden wird die Erfindung anhand von Ausführungsbeispielen näher erläutert.

Das Stoffgemisch zur Herkunftsbestimmung von Materialien besteht aus einem ersten Bestandteil sowie einem zweiten Bestandteil. Der erste Bestandteil enthält zumindest ein Isotop des Metalls Osmium und der zweite Bestandteil zumindest ein weiteres Metall, wobei der Massenanteil w₂ des zweiten Bestandteils um mindestens 5 %, vorzugsweise 10 %, größer ist als der Massenanteil w₁ des ersten Bestandteils. Dieses Stoffgemisch, das dem Material zugesetzt wird, hat eine definierte Zusammensetzung und dient somit als Marker. Da das Stoffgemisch die unterschiedlichsten Zusammensetzungen haben kann, ist der Einsatz des Stoffgemischs somit in den verschiedensten Materialien möglich und kann zu deren Herkunftsbestimmung dienen. Da der Anteil an zugesetztem Stoffgemisch sehr klein ist, hat es natürlich keinen Einfluss auf die Materialeigenschaften des Materials.

Bei dem Material kann es sich um einen metallischen, einen anorganischen nichtmetallischen, einen nichtmetallischer oder einen organischen Werkstoff handeln. Das Stoffgemisch kann aber auch einem Halbleiter oder einem Verbundwerkstoff als Marker zugesetzt sein. Aufgrund der spezifischen Zusammensetzung des Stoffgemisches kann durch instrumentelle Nachweisverfahren sehr einfach und einwandfrei festgestellt werden, wer Hersteller dieses Materials ist. Diese Herkunftsbestimmung dient somit letztendlich auch einer Qualitätskontrolle des entsprechenden Materials.

Der erste Bestandteil ist dabei aus der Gruppe ¹⁸⁴Os, ¹⁸⁶Os, ¹⁸⁷Os, ¹⁸⁸Os, ¹⁸⁹Os, ¹⁹⁰Os, und ¹⁹²Os ausgewählt. Vorteilhaft ist, dass sich Os sehr gut recyceln lässt und somit wiederverwendet werden kann. So kann Os, nachdem es aus dem Material herausgelöst und abgetrennt wurde, sehr einfach zum flüchtigen OsO₄ oxidiert werden. Die Oxidation kann beispielsweise mit HNO₃ oder mit Cr^{VI} in H₂SO₄ erfolgen. Anschließend wird OsO₄ durch Destillation abgetrennt, wobei durch Reduktion letztendlich als Hexabrom Osmiumsäure (H₂OsBr₆) stabilisiert zurückgewonnen wird. Bevorzugt enthält der zweite Bestandteil Metalle, die eine Ordnungszahl aufweisen, die größer als 30 und besonders bevorzugt größer als 40 ist. Als Metalle eignen sich insbesondere solche, die aus der Gruppe Mo, Pd, Pt, Au, W, Pb, Ir, Nb undloder Ta ausgewählt sind. Diese Metalle lassen sich besonders gut durch instrumentelle Verfahren, zum Beispiel Voltametrie, Atomspektroskopie oder Massenspektroskopie, nachweisen. Besonders bevorzugt wird als analytisches Verfahren die Massenspektroskopie eingesetzt.

Vorzugsweise weist der zweite Bestandteil nicht mehr als drei verschiedene

Metalle und besonders bevorzugt lediglich ein Metall auf, wobei vorzugsweise W verwendet wird, da es sich herausgestellt hat, dass ein Stoffgemisch bestehend aus zumindest einem Os-Isotop und W besonders gut geeignet ist, die Herkunft des Materials zu bestimmen.

Besonders bevorzugt wird ein Stoffgemisch eingesetzt, das neben W als der zweite Bestandteil ¹⁸⁴Os und/oder ¹⁸⁶Os umfasst, weil mit diesem Stoffgemisch die Herkunft des Materials besonders gut bestimmt werden kann.

Im Folgenden werden einige Beispiele für verschiedene Zusammensetzungen von Stoffgemischen gezeigt.

**Tabelle 1:**

| Bestandteil | Erster Bestandteil | Zweiter Bestandteil |
|---|---|---|
| Stoffgemisch, Anteil | W1, %-Anteil | W2, %-Anteil |
| Stoffgemisch 1 | ¹⁸⁶Os, 46 | Pd, 54 |
| Stoffgemisch 2 | ¹⁸⁶Os, 4 | Pd, 96 |
| Stoffgemisch 3 | ¹⁸⁶Os, 13 | W, 87 |
| Stoffgemisch 4 | ¹⁸⁶Os, 45 | Mo, 55 |
| Stoffgemisch 5 | ¹⁸⁸Os, 38 | W, 62 |
| Stoffgemisch 6 | ¹⁸⁴Os, 2 | W, 90 |
| | ¹⁸⁶Os, 8 | |
| | | |
| Stoffgemisch 7 | ¹⁸⁴Os, 11 | W, 67 |
| | ¹⁸⁶Os, 22 | |
| Stoffgemisch 8 | ¹⁸⁴Os, 22 | W, 67 |
| | ¹⁸⁶Os, 11 | |
| Stoffgemisch 9 | ¹⁸⁴Os, 2 | W, 97 |
| | ¹⁸⁶Os, 1 | |
| Stoffgemisch 10 | ¹⁸⁴Os, 27 | W, 58 |
| | ¹⁸⁷Os, 15 | |
| Stoffgemisch 11 | ¹⁸⁴Os, 27 | W, 20 |
| | ¹⁸⁷Os, 15 | Pt, 38 |
| Stoffgemisch 12 | ¹⁸⁴Os, 10 | Pt, 70 |
| | ¹⁸⁷Os, 10 | |
| | ¹⁹²Os, 10 | |
| Stoffgemisch 13 | ¹⁸⁴Os, 10 | Pt, 77 |
| | ¹⁸⁷Os, 2 | |
| | ¹⁹²Os, 11 | |
| Stoffgemisch 14 | ¹⁸⁴Os, 7 | W, 17 |
| | ¹⁸⁶Os, 3 | Pd, 9 |
| | ¹⁹²Os, 31 | Au, 33 |
| Stoffgemisch 15 | ¹⁸⁴Os, 44 | W, 27 |
| | | Pd, 19 |
| | | Au, 10 |
| Stoffgemisch 16 | ¹⁸⁴Os, 10 | W, 64 |
| | ¹⁸⁶Os, 3 | |
| | ¹⁸⁷Os, 12 | |
| | ¹⁹²Os, 11 | |
| Stoffgemisch 17 | ¹⁸⁹Os, 37 | Ta, 22 |
| | | Nb, 41 |
| Stoffgemisch 18 | ¹⁹⁰Os, 37 | Ta, 22 |
| | | Nb, 41 |
| Stoffgemisch 19 | ¹⁸⁸Os, 37 | Ta, 22 |
| | | Nb, 41 |
| Stoffgemisch 20 | ¹⁸⁴Os, 15 | W, 75 |
| | | Nb, 10 |
| Stoffgemisch 21 | ¹⁸⁴Os, 5 | W, 93 |
| | ¹⁹⁰Os, 2 | |
| Stoffgemisch 22 | ¹⁸⁴Os, 10 | W, 69 |
| | ¹⁹⁰Os, 21 | |
| Stoffqemisch 23 | ¹⁸⁴Os, 10 | W, 70 |
| | ¹⁸⁶Os, 10 | |
| | ¹⁸⁷Os, 10 | |
| Stoffgemisch 24 | ¹⁸⁴Os, 20 | W, 59 |
| | ¹⁸⁷Os, 21 | |
| Stoffgemisch 25 | ¹⁸⁴Os, 5 | W, 63 |
| | ¹⁸⁶Os, 10 | |
| | ¹⁹⁰Os, 22 | |

Die Summe der Massenanteile w₁ des ersten Bestandteils und w₂ des zweiten Bestandteils ergibt dabei in jedem Stoffgemisch 100.

Damit die Herkunft eines Materials bestimmt werden kann, wird dieses mit einem Stoffgemisch dotiert. Dabei enthält das Material 10 bis 1100 ppt an Stoffgemisch.

Bevorzugt weist das Material 10 bis 160 ppt und besonders bevorzugt 10 bis 30 ppt an Stoffgemisch auf.

Eine solche Menge an zugesetztem Stoffgemisch ist ausreichend, um durch analytische Verfahren die Zusammensetzung des Stoffgemisches qualitativ sowie auch quantitativ zu bestimmen und damit auf die Herkunft des Materials rückschließen zu können.

Es werden im Folgenden einige Beispiele für Materialien gezeigt, die mit verschiedenen Stoffgemischen nach Tabelle 1 dotiert sind.

**Tabelle 2:**

| Material | Stoffqemsich Nr. | Menge [ppt] |
|---|---|---|
| Elastomer | 6 | 50 |
| Elastomer | 6 | 120 |
| Elastomer | 6 | 241 |
| Stahl | 9 | 1100 |
| Stahl | 9 | 978 |
| Stahl | 9 | 700 |
| Stahl | 9 | 635 |
| Stahl | 9 | 400 |
| Stahl | 9 | 120 |
| Stahl | 9 | 50 |
| PVC | 8 | 40 |
| Waschpulver | 7 | 40 |
| Aluminium | 7 | 30 |
| Aluminium | 7 | 35 |
| Aluminium | 15 | 25 |
| Graphit | 3 | 100 |
| Graphit | 3 | 87 |
| Graphit | 3 | 66 |
| Halbleiter | 3 | 10 |
| Halbleiter | 3 | 187 |
| Getränkekarton | 3 | 99 |

Da der Anteil an zugesetztem Stoffgemisch in dem Material sehr klein ist, hat das Stoffgemisch keinen Einfluss auf die Materialeigenschaften.

Disclaimer: Die in der Tabelle 1 aufgelisteten Stoffgemische mit den Nummern 1, 2, 4, 5, 10 bis 14, 16 bis 19 und 21 bis 25 gehören nicht zu der in Anspruch 1 beanspruchten Erfindung.

## Patentansprüche

1. Stoffgemisch zur Herkunftsbestimmung von Materialien, wobei das Stoffgemisch genau zwei Bestandteile aufweist, wobei der erste Bestandteil zumindest ein Isotop des Metalls Osmium ist und wobei der zweite Bestandteil zumindest W enthält, wobei der Massenanteil w₂ des zweiten Bestandteils um mindestens 5 %, vorzugsweise 10 %, größer ist als der Massenanteil w₁ des ersten Bestandteils, **dadurch gekennzeichnet, dass** der zweite Bestandteil aus Metallen besteht und dass der erste Bestandteil ¹⁸⁴Os und/oder ¹⁸⁶Os ist.

2. Stoffgemisch nach Patentanspruch 1, **dadurch gekennzeichnet, dass** der zweite Bestandteil zusätzlich Mo, Pd, Pt, Au, Pb, Ir, Nb und/oder Ta aufweist.

3. Material, das mit dem Stoffgemisch nach den Patentansprüchen 1 bis 2 dotiert ist.

4. Material nach Patentanspruch 3, **dadurch gekennzeichnet, dass** das Material aus der Gruppe metallischer Werkstoff, anorganischer nichtmetallischer Werkstoff, nichtmetallischer Werkstoff, organischer Werkstoff, Halbleiter und Verbundwerkstoff ausgewählt ist.

5. Material nach Patentanspruch 3, **dadurch gekennzeichnet, dass** das Material 10 bis 1100 ppt an Stoffgemisch enthält.

6. Material nach Patentanspruch 3, **dadurch gekennzeichnet, dass** das Material 10 bis 160 ppt an Stoffgemisch enthält.

7. Material nach Patentanspruch 6, **dadurch gekennzeichnet, dass** das Material 10 bis 30 ppt an Stoffgemisch enthält.

8. Verwendung des Stoffgemischs nach den Patentansprüchen 1 bis 2 als Marker in Materialien.

## Claims

1. Composition for determining origin of materials, the composition having exactly two constituents, the first constituent being at least one isotope of the metal osmium and the second constituent containing at least W, with the mass fraction w₂ of the second constituent being greater by at least 5%, preferably 10%, than the mass fraction w₁ of the first constituent, **characterized in that** the second constituent consists of metals and **in that** the first constituent is ¹⁸⁴Os and/or ¹⁸⁶Os.

2. Composition according to Claim 1, **characterized in that** the second constituent additionally comprises Mo, Pd, Pt, Au, Pb, Ir, Nb and/or Ta.

3. Material doped with the composition according to Claims 1 to 2.

4. Material according to Claim 3, **characterized in that** the material is selected from the group of metallic material, inorganic non-metallic material, non-metallic material, organic material, semiconductors and composite material.

5. Material according to Claim 3, **characterized in that** the material contains 10 to 1100 ppt of composition.

6. Material according to Claim 3, **characterized in that** the material contains 10 to 160 ppt of composition.

7. Material according to Claim 6, **characterized in that** the material contains 10 to 30 ppt of composition.

8. Use of the composition according to Claims 1 to 2 as a taggant in materials.

## Revendications

1. Mélange de substances pour déterminer l'origine de matériaux, le mélange de substances comportant exactement deux composants, le premier composant étant au moins un isotope du métal osmium et le deuxième composant contenant au moins W, la fraction massique w2 du deuxième composant étant supérieure d'au moins 5 %, de préférence de 10 %, à la fraction massique w1 du premier composant, **caractérisé en ce que** le deuxième composant est constitué de métaux et **en ce que** le premier composant est ¹ Os et/ou ¹⁸⁶Os.

2. Mélange de substances selon la revendication 1, **caractérisé en ce que** le deuxième composant comporte en outre Mo, Pd, Pt, Au, Pb, Ir, Nb et/ou Ta.

3. Matériau dopé avec le mélange de substances selon les revendications 1 à 2.

4. Matériau selon la revendication 3, **caractérisé en ce que** le matériau est choisi dans le groupe comprenant un matériau métallique, un matériau inorganique non métallique, un matériau non métallique, un matériau organique, un semi-conducteur et un matériau composite.

5. Matériau selon la revendication 3, **caractérisé en ce que** le matériau contient 10 à 1100 ppt de mélange de substances.

6. Matériau selon la revendication 3, **caractérisé en ce que** le matériau contient 10 à 160 ppt de mélange de substances.

7. Matériau selon la revendication 6, **caractérisé en ce que** le matériau contient 10 à 30 ppt de mélange de substances.

8. Utilisation du mélange de substances selon les revendications 1 à 2 comme marqueur dans des matériaux.
